**Europäisches Patentamt**

(19) **European Patent Office**

**Office européen des brevets**

(11) Publication number: **0 129 519
B1**

(12) **EUROPEAN PATENT SPECIFICATION**

(45) Date of publication of the patent specification:
**27.08.86**

(51) Int. Cl.⁴: **B 60 Q 1/06**

(21) Application number: **84830162.8**

(22) Date of filing: **28.05.84**

(54) Motor vehicle spot lamp with an adjusting device.

(30) Priority: **10.06.83 IT 6764583**

(43) Date of publication of application:
**27.12.84 Bulletin 84/52**

(45) Publication of the grant of the patent:
**27.08.86 Bulletin 86/35**

(84) Designated Contracting States:
**DE FR GB**

(56) References cited:
**FR - A - 2 330 563**
**FR - A - 2 434 994**

(73) Proprietor: **FIAT AUTO S.p.A., Corso Giovanni Agnelli 200, I-10135 Torino (IT)**

(72) Inventor: **Musanti, Dario, Via Puccini 3/b, I-10092 Beinasco (Torino) (IT)**

(74) Representative: **Buzzi, Franco et al, c/o Jacobacci-Casetta & Perani S.p.A. Via Alfieri, 17, I-10121 Torino (IT)**

ACTORUM AG

## Description

The present invention relates to motor vehicle spotlamps including a body adjustably connected to a support structure, and adjusting means for adjusting the position of the body relative to the support structure.

The object of the invention is to provide a spotlamp of the type defined above the adjustment of which can be achieved precisely and accurately by means of a small number of members which are simple and economic to manufacture and assemble.

According to the invention, this object is achieved by virtue of the fact that:

the body and the support structure of the spotlamp have two inter-connection formations located on opposite sides of the body, the first of these formations being formed so as to allow angular displacement of the body about an inclination-adjustment axis thereof which passes substantially through the second formation, and

the adjusting means include an inclination adjusting member which carries an eccentric shaft and is supported by the body so as to be rotatable about an axis parallel to the said inclination adjustment axis, an attachment element rigid with the body and having an aperture in which is slidably engaged, with play, the said eccentric shaft, and drive means for rotating the adjusting member such that the displacement of the eccentric shaft causes, via the said attachment element, the angular displacement of the body about the said inclination-adjustment axis.

Preferably the said connection formations are formed so as to allow angular displacements of the body about an orientation-adjustment axis passing through the formations, the said adjusting means further including orientation adjusting means for effecting angular displacement of the body about the orientation-adjustment axis.

In a preferred embodiment of the invention the said eccentric shaft is movable axially relative to the inclination adjusting member and constitutes the said orientation adjusting member for the lamp.

Further characteristics of the invention will become evident in the course of the detailed description which follows, with reference to the appended drawings, provided purely by way of nonlimiting example, in which:

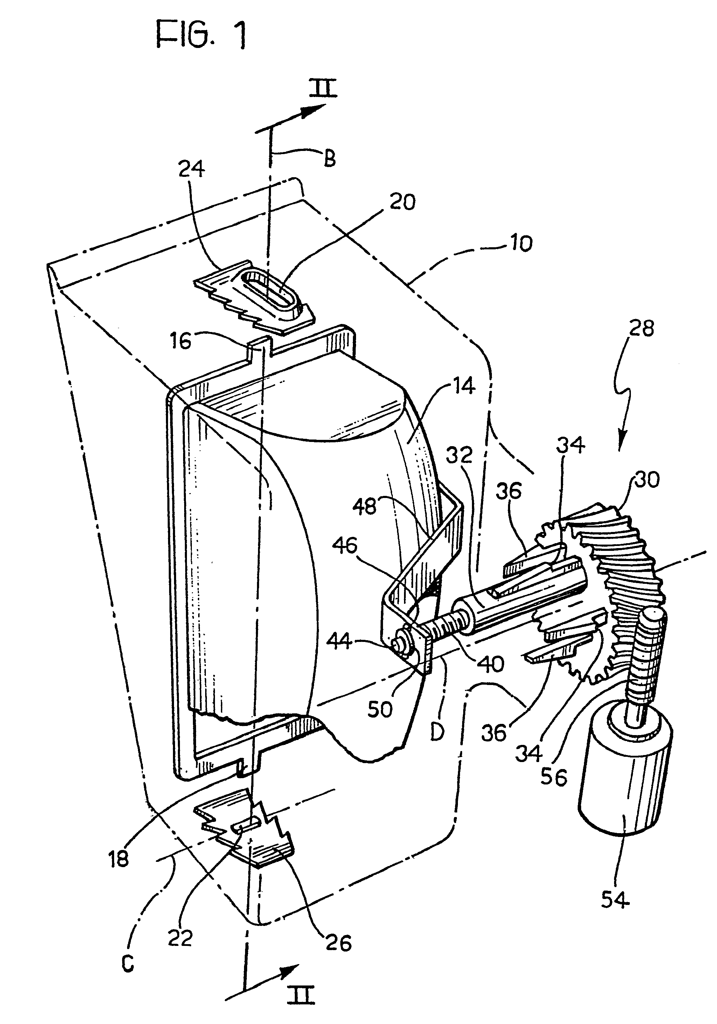

Figure 1 is a schematic perspective view illustrating a spotlamp for a motor vehicle according to a preferred embodiment of the invention,

Figure 2 is a schematic sectional view taken on line II-II of Figure 1, and

Figure 3 is a sectional view taken on line III-III of Figure 2.

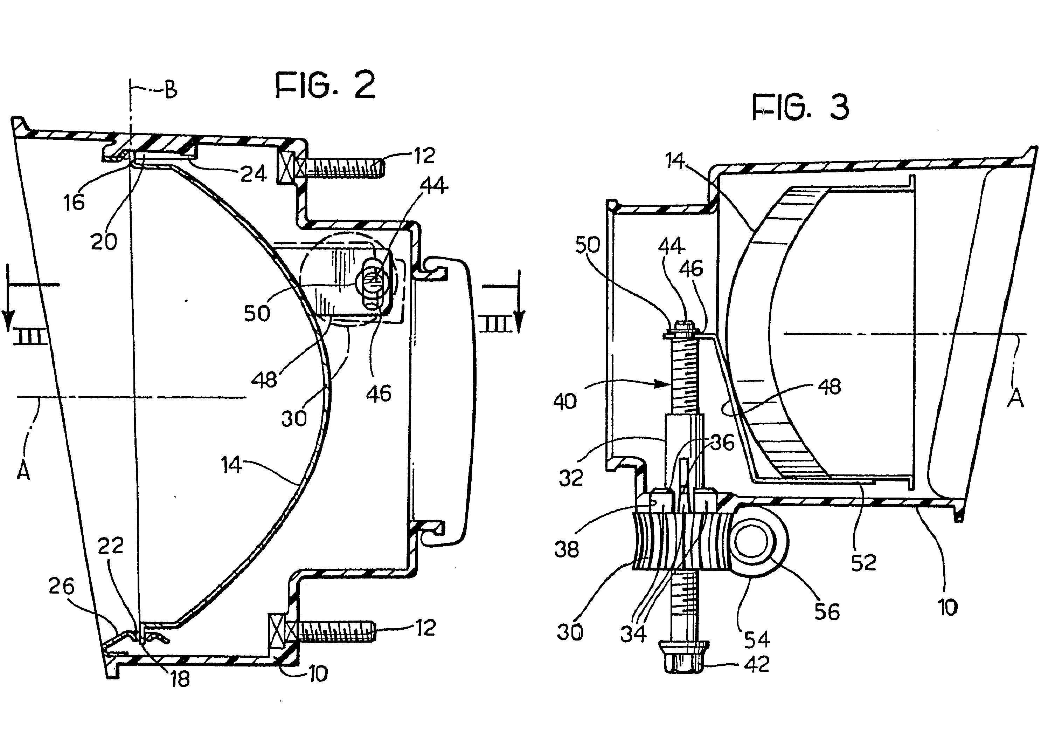

The spotlamp for motor vehicles illustrated in the example comprises a support casing 10 which is generally dish shaped with a front aperture and is provided with screws 12 for fixing it to the front of a motor vehicle in the position illustrated in Figure 2.

Within the casing 10 is a reflecting body 14 having a generally paraboloid form with its cavity facing the aperture of the casing 10. The body 14 supports in known manner a light source, usually an incandescent bulb not shown in the drawings.

The connection of the body 14 to the casing 10 is achieved, in a particularly simple and economical manner, by means of a pair of rectangular projections 16, 18 that project in opposite directions respectively upwardly and downwardly from the edge of the body 14 and engage with play in respective apertures 20, 22 of the casing 10. These apertures 20, 22 may be formed directly in the upper wall and in the lower wall of the casing 10 or, as in the example illustrated, may be formed in elements 24, 26 separate from the casing 10 and attached thereto by snap engagement, an interference fit or some other type of attachment.

The aperture 20 is constituted by an elongate slot having dimensions such as to allow the sliding of the projection 16 in a direction parallel to the axis A of the spotlamp while the aperture 22 is formed by a slot having a shape such as to prevent similar sliding of the corresponding lug 18 of the body 14. Both the apertures 20 and 22 are arranged to permit angular displacements of the lugs 16 and 18, and hence of the body 14 about an axis B passing through the lugs 16, 18 and thus substantially vertical.

Reference 28 generally indicates an adjusting device by means of which it is possible to adjust both the inclination of the body 14 relative to the casing 10 by means of the angular displacement of the body 14 about an inclination adjusting axis C substantially perpendicular to the axes A and B and passing through the lower projection 18, and the orientation of the body 14 by means of angular displacement about the axis B.

The device 28 includes a cylindrical sprocket 30 which is rotatably supported outside the casing 10 about an axis D parallel to the axis C, and is provided with an eccentric but axially extending tubular lug 32 which projects into the casing 10. Preferably the mounting of the sprocket 30 relative to the casing 10 is achieved by means of a plurality of radially resilient axial lugs 34 that form retaining teeth 36 which snap engage in an aperture 38 in the side wall of the casing 10. The sprocket 30 is preferably made by being moulded from plastics material integrally with the eccentric tubular lug 32 and the axial lugs 34.

The eccentric tubular lug 32 has an internal screw thread, not visible in the drawings, through which extends a screw 42 which is screwed into this thread.

At one end the screw 40 has a head 42 which is disposed outside the casing 10 while at its other end is a tang 44 which passes, with clearance, through an aperture 46 in an attachment arm 48 rigid with the body 14. The aperture 46 is in the form of an elongate slot extending in a direction substantially parallel to the axis B, the tang 44 being retained axially relative thereto by means of a retaining ring 50.

The attachment arm 48 has a generally Z-shape and is fixed to the back of the body 14 in correspondence with a zone 52 adjacent the upper connecting projection 16.

Reference 54 generally indicates an electrical actuator which is connectable to the electrical supply of the vehicle to cause rotation of a worm screw 56 which engages the sprocket 30.

As will be clear from the foregoing description, a rotation imparted to the sprocket 30 by the worm screw 56 causes, as a result of the eccentricity of the screw 40 inserted in the tubular lug 32, an angular displacement about the axis C of the body 14 thereby enabling its inclination to be adjusted.

In order to adjust the orientation of the body 14 about the axis B it is only necessary to screw or unscrew the screw 40 relative to the tubular lug 32 by operating on the head 42 of this screw 40.

Naturally, the constructional details and the embodiments may be varied with respect to that described and illustrated without thereby departing from the scope of the present invention as claimed.

## Claims

1. A motor vehicle spotlamp including a body (14) adjustably connected to a support structure (10), and adjusting means (28) for adjusting the position of the body relative to the support structure, characterised in that:
the body (14) and the support structure (10) have two inter-connection formations (16, 20; 18, 22) located on opposite sides of the body (14), the first (16, 20) of these formations being formed so as to allow angular displacement of the body (14) about an inclination-adjustment axis (C) of this body (14) which passes substantially through the second formation (18, 22), and
the adjusting means include an inclination adjusting member (30) which carries an eccentric shaft (40) and is supported by the body (10) so as to be rotatable about an axis (D) parallel to the said inclination-adjustment axis (C), an attachment element (48) rigid with the body (14) and having an aperture (46) in which is slidably engaged, with play, the said eccentric shaft (40), and drive means (54, 56) for rotating the inclination adjusting member (30) such that the displacement of the eccentric shaft (40) causes, via the said attachment element (48), the angular displacement of the body (14) about the said inclination-adjustment axis (C).

2. A spotlamp according to Claim 1, characterised in that the connection formations (16, 20; 18, 22) are formed so as to allow angular displacements of the body (14) about an orientation-adjustment axis (B) passing through the formations (16, 20; 18, 22), and in that the said adjusting means further include an orientation adjusting member (40) for effecting angular displacement of the body (14) about the said orientation-adjustment axis (B).

3. A spotlamp according to Claim 1 or Claim 2, characterised in that the said connection formations include projections (16, 18) of the body (14) which are inserted with play in respective apertures (20, 22) in the support structure (10), the aperture (20) associated with the first formations (16, 20) having an elongate shape which allows sliding of the corresponding projection (16) of the body (14).

4. A spotlamp according to Claim 2, characterised in that the said eccentric shaft (40) is axially displaceable relative to the inclination adjusting member (30) and constitutes the said orientation adjusting member.

5. A spotlamp according to Claim 4, characterised in that the inclination adjusting member (30) has an eccentric, axially-extending tubular part (32) which is internally screw threaded, the eccentric shaft being constituted by a screw (40) which is engaged in the tubular part (32).

6. A spotlamp according to Claim 1, characterised in that the inclination adjusting member is constituted by a cylindrical toothed sprocket (30) and in that the drive means include an electric actuator (54) and a worm screw (56) which meshes with the sprocket (30) and is rotated by the said electric actuator (54).

7. A spotlamp according to Claim 6, characterised in that the sprocket (30) has radially-resilient axial lugs (34) which define retaining teeth (36) for snap engagement in a corresponding aperture (38) in the support structure (10).

8. A spotlamp according to Claim 1, characterised in that the attachment element is formed by a substantially Z-shaped arm (48) fixed to the body adjacent the said first connection formation (16, 20).

9. A spotlamp according to Claim 1, characterised in that the support structure is constituted by a casing (10) which is open at the front, and the body (14) is constituted by a substantially parabolic reflector facing the opening in the casing (10).

## Revendications

1. Projecteur pour véhicule automobile, comprenant un corps (14) relié de façon réglable à une structure porteuse (26), et des moyens de réglage (28) servant à régler la position du corps par rapport à la structure porteuse, caractérisé en ce que: le corps (14) et la structure porteuse (10) présentent deux formations de montage (16, 20; 18, 22) situées sur deux côtés opposés du corps (14), les premières (16, 20) de ces formations étant formées de manière à permettre un déplacement angulaire du corps (14) autour d'un axe (C) de réglage de l'inclinaison de ce corps (14) qui passe sensiblement par les deuxièmes formations (18, 22) et en ce que les moyens de réglage comprennent un organe de réglage de l'inclinaison (30) qui porte une tige excentrique (40) et est supporté par le corps (10), de manière à pouvoir tourner autour d'un axe (B) parallèle audit axe (C) de réglage de l'inclinaison, un élément de fixation (48) rigidement solidaire du corps (14) et présentant une ouverture (46) dans laquelle ladite tige excentrique (40) est engagée à coulissement, avec jeu, et des moyens d'entraînement (54, 56) servant à faire tourner l'organe (30) de réglage de l'inclinaison de telle manière que le déplacement de la tige excentrique (40) détermine, par l'intermédiaire dudit élément de fixation (48), le déplacement angulaire du corps (14) autour dudit axe de réglage de l'inclinaison (C).

2. Projecteur selon la revendication 1, caractérisé en ce que les formations de montage (16, 20; 18, 22) sont formées de manière à permettre des déplacements angulaires du corps (14) autour d'un axe de réglage de l'orientation (B) qui passe par les formations (16, 20; 18, 22), et en ce que lesdits moyens de réglage comprennent en outre un organe de réglage de l'orientation (40) servant à provoquer un déplacement angulaire du corps (14) autour dudit axe de réglage de l'orientation (B).

3. Projecteur selon la revendication 1 ou la revendication 2, caractérisé en ce que lesdites formations de montage comprennent des saillies (16, 18) du corps (14) qui sont engagées avec jeu dans des ouvertures respectives (20, 22) de la structure porteuse (8), l'ouverture (20) associée à la première formation (16, 20) possédant une forme allongée qui permet un coulissement de la saillie correspondante (16) du corps (14).

4. Projecteur selon la revendication 2, caractérisé en ce que ladite tige excentrique (40) peut se déplacer axialement par rapport à l'organe de réglage de l'inclinaison (30) et constitue ledit organe de réglage de l'orientation.

5. Projecteur selon la revendication 4, caractérisé en ce que l'organe de réglage de l'inclinaison (40) comprend une pièce tubulaire excentrique (32) s'étendant axialement, qui est filetée intérieurement, ladite tige excentrique étant constituée par une vis (40) qui est engagée dans la pièce tubulaire (32).

6. Projecteur selon la revendication 1, caractérisé en ce que l'organe de réglage de l'inclinaison est constitué par une roue dentée cylindrique (30) et en ce que les moyens d'entraînement comprennent un actionneur électrique (54) et une vis sans fin (56) qui engrène avec la roue dentée (30) et qui est entraînée en rotation par ledit actionneur électrique (54).

7. Projecteur selon la revendication 6, caractérisé en ce que la roue dentée (30) possède des tétons axiaux (34), élastiques dans la direction radiale, qui définissent des dents de retenue (36) destinées à s'engager à encliquetage dans une ouverture correspondante (38) de la structure porteuse (10).

8. Projecteur selon la revendication 1, caractérisé en ce que l'élément de fixation est formé par un bras sensiblement en Z (48) fixé au corps dans la région desdites premières formations de montage (16, 20).

9. Projecteur selon la revendication 1, caractérisé en ce que la structure porteuse est constituée par un boîtier (10) qui est ouvert à l'avant et en ce que le corps (14) est constitué par un réflecteur sensiblement parabolique qui regarde vers l'ouverture du boîtier (10).

**Patentansprüche**

1. Kraftfahrzeuglampe mit einem Körper (14), der mit einer Tragkonstruktion (10) einstellbar verbunden ist, sowie mit einer Einstellvorrichtung (28) zur Einstellung der Position des Körpers (14) relativ zu der Tragkonstruktion (10), dadurch gekennzeichnet, dass der Körper (14) und die Tragkonstruktion (10) durch zwei Verbindungsanordnungen (16, 20; 18, 22) miteinander verbunden sind, die sich auf entgegengesetzten Seiten des Körpers (14) befinden, wobei die erste (16, 20) dieser Verbindungsanordnungen so ausgebildet ist, dass sie eine Verschwenkung des Körpers (14) um eine Neigungseinstellachse (C) ermöglicht, die im wesentlichen durch die zweite Verbindungsanordnung (18, 22) verläuft,
und dass die Einstellvorrichtung folgende Teile umfasst:
— ein Neigungseinstellglied (30), das eine exzentrische Welle (40) trägt und an der Tragkonstruktion (10) um eine Achse (D) drehbar gelagert ist, die parallel zu der Neigungseinstellachse (C) verläuft,
— ein mit dem Körper (14) starr verbundenes Kupplungselement (48) mit einer Öffnung (46), in die die exzentrische Welle (40) mit Spiel gleitend eingreift,
— sowie Antreibsmittel (54, 56), durch die das Neigungseinstellglied (30) derart drehbar ist, dass die Bewegung der exzentrischen Welle (40) über das genannte Kupplungselement (48) ein Verschwenkung des Körpers (14) um die genannte Neigungseinstellachse (C) bewirkt.

2. Kraftfahrzeuglampe nach Anspruch 1, dadurch gekennzeichnet, dass die Verbindungsanordnungen (16, 20; 18, 22) derart ausgebildet sind, dass ferner eine Verschwenkung des Körpers (14) um eine Richtungseinstellachse (B) möglich ist, die durch die beiden Verbindungsanordnungen (16, 20; 18, 22) verläuft, und dass die Einstellvorrichtung ferner ein Einstellglied (40) zur Richtungseinstellung umfasst, durch das der Körper (14) um diese Richtungseinstellachse (B) verschwenkbar ist.

3. Kraftfahrzeuglampe nach Anspruch 1 oder 2, dadurch gekennzeichnet, dass die Verbindungsanordnungen an dem Körper (14) ausgebildete Ansätze (16, 18) umfassen, die mit Spiel in entsprechende Öffnungen (20, 22) der Tragkonstruktion (10) eingreifen, wobei die der ersten Verbindungsanordnung (16, 20) zugeordnete Öffnung (20) die Form eines Langlochs hat, in dem eine Gleitbewegung des entsprechenden Ansatzes (16) des Körpers (14) möglich ist.

4. Kraftfahrzeuglampe nach Anspruch 2, dadurch gekennzeichnet, dass die exzentrische Welle (40) relativ zu dem Neigungseinstellglied (30) axial bewegbar ist und das genannte Einstellglied zur Richtungseinstellung bildet.

5. Kraftfahrzeuglampe nach Anspruch 4, dadurch gekennzeichnet, dass an dem Neigungseinstellglied (30) ein exzentrisches, in axialer Richtung verlaufendes rohrförmiges Teil (32) vorgesehen ist, in dem ein Innengewinde ausgebildet ist, und dass die exzentrische Welle aus einer in dieses rohrförmige Teil (32) eingreifenden Schraube (40) besteht.

6. Kraftfahrzeuglampe nach Anspruch 1, dadurch gekennzeichnet, dass das Neigungseinstellglied von einem zylindrischen Zahnrad (30) gebildet ist und dass die Antriebsmittel eine elektrische Antriebsvorrichtung (54) sowie eine Schneckenspindel (56) umfassen, die mit dem Zahnrad (30) kämmt und durch die elektrische Antriebsvorrichtung (54) drehbar ist.

7. Kraftfahrzeuglampe nach Anspruch 6, dadurch gekennzeichnet, dass das Zahnrad (30) axiale Ansätze (34) aufweist, die in radialer Richtung elastisch nachgiebig sind und Haltezähne (36) besitzen, die in eine entsprechende Öffnung (38) der Tragkonstruktion (10) einschnappbar sind.

8. Kraftfahrzeuglampe nach Anspruch 1, dadurch gekennzeichnet, dass das Kupplungselement von einem im wesentlichen Z-förmigen Arm (48) gebildet ist, der an dem Körper (14) in der Nähe der ersten Verbindungsanordnung (16, 20) befestigt ist.

9. Kraftfahrzeuglampe nach Anspruch 1, dadurch gekennzeichnet, dass die Tragkonstruktion aus einem an der Vorderseite offenen Gehäuse (10) besteht und dass der Körper (14) aus einem im wesentlichen parabolischen Reflektor besteht, der der Öffnung des Gehäuses (10) zugewandt ist.

# FIG. 1

FIG. 2

FIG. 3

0 129 519